# EUROPÄISCHE PATENTSCHRIFT

(11) **EP 2 513 550 B1**
(45) Veröffentlichungstag und Bekanntmachung des Hinweises auf die Patenterteilung: **21.10.2015**
(21) Anmeldenummer: 10803348.1
(22) Anmeldetag: 24.11.2010
(51) Int. Cl.: F16L 55/04, F16L 55/052, F16D 48/02

(54) **DÄMPFUNGSEINRICHTUNG**
DAMPING DEVICE
DISPOSITIF D'AMORTISSEMENT

(30) Priorität: 17.12.2009 DE 102009058621
(43) Veröffentlichungstag der Anmeldung: 24.10.2012
(73) Patentinhaber: Schaeffler Technologies AG & Co. KG, 91074 Herzogenaurach (DE)
(72) Erfinder: BERTHELEMY, Pierre-Yves, F-67000 Strassbourg (FR)
(86) Internationale Anmeldenummer: PCT/DE2010/001384
(87) Internationale Veröffentlichungsnummer: WO 2011/072635

(56) Entgegenhaltungen:
- EP-A1- 1 865 188
- WO-A1-02/25164
- DE-A1-102006 017 694
- US-A- 2 630 833
- US-A- 3 018 799

## Beschreibung

Die Erfindung betrifft eine Dämpfungseinrichtung zur Dämpfung unerwünschter Druckschwankungen in einer hydraulischen Strecke zur Kupplungsbetätigung gemäß dem Oberbegriff des Patentanspruchs1, insbesondere für Kraftfahrzeuge.

Aus der Druckschrift DE 10 2008 003 991 A1 ist eine Lösung zur Unterdrückung von Eigenresonanzen in einer hydraulischen Strecke bekannt, bei welcher dazu ein in besonders ausgestalteter Helmholtz-Resonator verwendet wird. Dieser besteht aus einem Leitungsstück, das mit einem von diesem abzweigenden Behälter verbunden ist. Die Verzweigung, die aus einem T-Stück gebildet wird, ermöglicht, den Helmholtz-Resonator mit dem Ausrücksystem zu verknüpfen. Das Ausrücksystem besteht im Wesentlichen aus einem Geber- und einem Nehmerzylinder, die mittels einer Druckleitung miteinander verbunden sind. Die Druckleitung ist ihrem Volumen entsprechend mit Fluidmasse befüllt und fungiert somit als Speicher für die kinetische Energie. Der als Druckspeicher fungierende Behälter hat die Funktion eines federnden Elements mit einer bestimmten hydraulischen Kapazität. Er speichert damit die potentielle Energie. Die Abmessungen der Druckleitung und die hydraulische Kapazität des Behälters sollen nach der erfinderischen Lösung so abgestimmt werden, dass die Eigenfrequenz des Helmholtz-Resonators der zu filternden Frequenz im Ausrücksystem entspricht.

Gemäß einer noch nicht veröffentlichten Lösung ist ebenfalls eine Dämpfungseinrichtung an mindestens einem Abzweig innerhalb einer hydraulischen Strecke zur Kupplungsbetätigung angeordnet. Der Abzweig wird aus einem Winkelstecker mit zwei vorzugsweise rechtwinklig zueinander ausgeführten Steckern gebildet. Die Verbindung der Dämpfungseinrichtung mit einem dieser Stecker wird in axialer Richtung mittels eines Befestigungselementes gesichert, wobei die Dämpfungseinrichtung durch einen die Austrittsöffnung dieses Steckers teilweise verschließenden Drosselstecker gebildet wird, der von einem mit einem Einsatz versehenen Behälter umhüllt wird.

Die Verwendung einer Dämpfungseinrichtung quer zu der Druckleitung, die sich zwischen Geberzylinder und Nehmerzylinder erstreckt, und ein separates Gehäuse aufweist, ist dabei relativ aufwendig und erfordert einen großen Bauraumbedarf. Weiterhin weisen die Tilger eine relativ hohe Steifigkeit auf, wobei die Steifigkeit des Speichers eine wichtige Rolle in der Funktionserfüllung spielt. Die Breitbandigkeit ist stark abhängig von der hydraulischen Kapazität des Speichers. Je nachgiebiger der Speicher ist, desto breitbandiger wirkt der Tilger, wobei andererseits diese Kapazität möglichst klein bleiben sollte, um zu viel Pedalverluste zu vermeiden. Weiterhin wurde festgestellt, dass die störenden Schwingungen oft breitbandiger als der Funktionsbereich des Tilgers sind und dass die vorgenannt beschriebenen steifen Tilger manchmal auch zur Verstärkung von anderen Resonanzen führen. Eine Möglichkeit dieses Problem zu lösen kann in der Erhöhung der Steifigkeit der Dose höher als 4mm³/bar vorgesehen werden, wobei jedoch eine derartige konstruktive Maßnahme mit den aktuellen Lösungen nicht möglich ist. Eine Reduzierung der Wandstärke oder Vergrößerung der Fläche führt zu höher Belastung im Material (in besondere für das Schweißen).

Darüber hinaus sind alle konstruktiven Lösungen bis heute nur mit senkrechtem Speicher neben der Leitung ausgelegt. Diese Ausrichtung ist oft problematisch bei Bauraumuntersuchung, da außerdem der Speicher zur Entlüftung immer nach unten montiert sein soll.

Eine Dämpfungseinrichtung gemäß dem Oberbegriff des Patentanspruchs 1 ist aus der DE 10 2006 017 694 A1 bekannt.

Die Aufgabe der Erfindung besteht darin, eine Dämpfungseinrichtung zur Dämpfung unerwünschter Druckschwankungen in einer hydraulischen Strecke zur Kupplungsbetätigung für Kraftfahrzeuge zu schaffen, die unter Verwendung eines Tilgers basierend auf dem Helmholtz Resonator Pinzip bei einer mittleren Steifigkeit (∼8mm³/bar) einen geringen Bauraum erfordert.

Diese Aufgabe wird mit einer Dämpfungseinrichtung mit den Merkmalen des ersten Patentanspruchs gelöst. Vorteilhafte Ausgestaltungen ergeben sich aus den Unteransprüchen.

Die Dämpfungseinrichtung dient zur Dämpfung unerwünschter Druckschwankungen/Frequenzen in einer hydraulischen Strecke zur Kupplungsbetätigung, wobei ein Gebezylinder und ein Nehmerzylinder mittels einer von Fluid durchströmten Druckleitung miteinander verbunden sind, unter Verwendung eines Tilgers/Speichers der mit der Druckleitung verbunden ist, und auf dem Helmholtz-Resonator Prinzip beruht, wobei der Tilger erfindungsgemäß ein Gehäuse mit einem Ringraum aufweist, der im Wesentlichen parallel zur Durchflussrichtung des die Druckleitung durchströmenden Fluids angeordnet ist.

An den Ringraum schließt sich endseitig ein Einpressteil an, welches mit einem Deckel versehen ist, der einen Anschluss mit einer Durchgangsöffnung für die Druckleitung aufweist, wobei durch das Einpressteil eine Zuleitung in den Ringraum führt.

Zwischen Einpressteil und Gehäuse ist eine Verdrehsicherung in Form einer Abflachung am Einpressteil vorgesehen, die mit einer entsprechenden Fläche des Gehäuses korrespondiert.

Bevorzugt ist der Tilger koaxial zur Druckleitung angeordnet und weist eine Steifigkeit (hydraulische Kapazität für die Tilgungsfunktion) von ∼8mm³/bar auf.

Aus dieser koaxialen Einbindung des Tilgers ergeben sich vereinfachte und schlankere/platzsparende Einbaumöglichkeiten, die neue Anordnungsmöglichkeiten des Tilgers in der Druckleitung ermöglichen. Dabei sollte der Tilgers möglichst am Schwingungsbauch nicht am Schwingungsknoten im System eingekoppelt werden.

Der Tilger/Speicher weist bevorzugt ein Gehäuse mit einer Durchgangsbohrung und einer Gehäusewand auf, in der sich ein Ringraum erstreckt.

Diese konstruktive Ausführung ermöglicht eine Konstruktion und Montage des Tilgers mit nur drei Teilen sowie eine schlanke Bauform, wodurch ein nur geringer Bauraumbedarf erforderlich ist.

Die Zuleitung zum Ringraum ist als Nut ausgebildet, die radial außen durch die Gehäusewand geschlossen ist derart, dass die Nut als Bohrung wirkt. Dadurch ist einfache und Platz sparende Realisierung der Zuleitung in den Ringraum möglich.

Das Einpressteil weist in Richtung zum Deckel einen Strömungsverteiler auf, der das Fluid von der Durchgangsöffnung des Anschlusses in Deckel radial nach außen führt.

Auch das Gehäuse besitzt an seinem dem ersten Anschluss gegenüberliegenden Ende einen zweiten Anschluss für die Druckleitung, mit welchem es lagefixiert an der Druckleitung befestigbar ist, so dass das Gehäuse so in die Druckleitung eingebunden werden kann, dass die relative Position der Zuleitung zu der Druckleitung bekannt und verstellbar ist, so dass zur Gewährleistung der Entlüftung die Zuleitung nach oben ausgerichtet ist. Das Einpressteil weist einen Stömungsverteiler auf, durch welchen Fluid an die die höchste Stelle des Tilgers gelangt. Durch diese konstruktiven Maßnahmen ist eine Selbstentlüftung des Systems sichergestellt.

Die Erfindung wird nachfolgend anhand eines Ausführungsbeispiels und zugehöriger Zeichnungen näher erläutert.

Es zeigen:
Figur 1 einen Längsschnitt durch einen erfindungsgemäßen Tilger/Speicher,
Figur 2 eine dreidimensionale Darstellung des Tilgers,
Figur 3 eine dreidimensionale Einzeldarstellung des Einpressteils,
Figur 4 eine dreidimensionale Darstellung des Deckels.

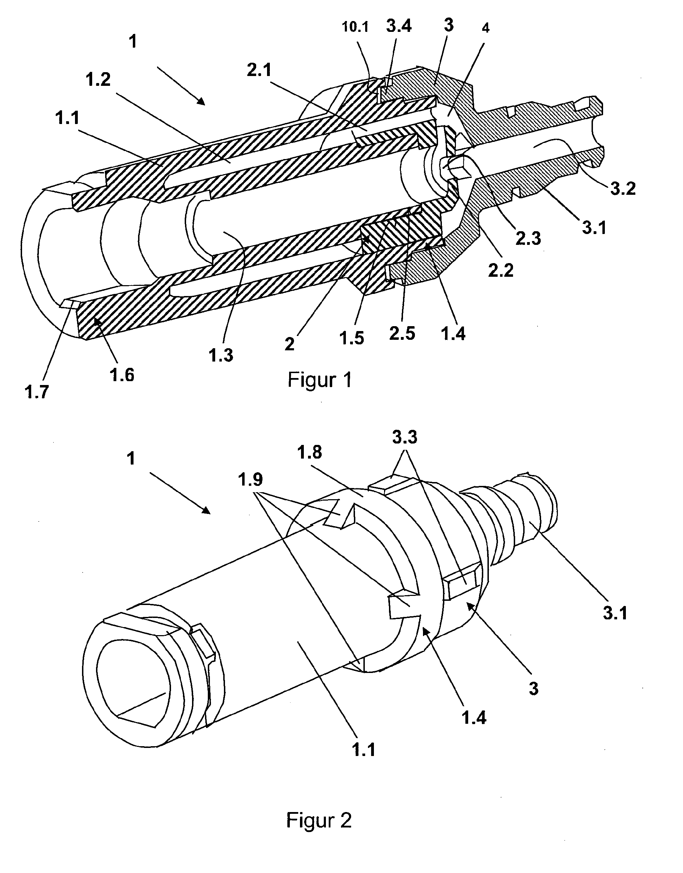

Figur 1 zeigt einen Längsschnitt eines Tilgers 1, der ein Gehäuse 1.1 aufweist. Auf die Darstellung von Dichtungen und Halteklammer wurde verzichtet.

In dem Gehäuse 1.1 sind ein Ringraum 1.2 und eine zentrische Durchflussöffnung 1.3 ausgebildet. An dem ersten Ende 1.4 des Gehäuses 1.1, aus dessen Richtung Ringraum 1.2 eingebracht ist, wurde ein Einpressteil 2 vorgesehen, welches in den Ringraum 1.2 eingepresst ist und mit einem radial nach innen weisenden (nicht bezeichneten) Absatz an einer Stirnfläche am ersten Ende 1.4 des Gehäuses 1.1 anliegt. Am ersten Ende 1.4 des Gehäuses 1.1 ist ein Deckel 3 befestigt, der einen Anschluss 3.1 mit einer Durchgangsöffnung 3.2 zur Anbindung an eine nicht dargestellte Druckleitung aufweist.

Das Einpressteil 2 ist an seinem Außenumfang mit einer Nut versehen, die eine Zuleitung 2.1 zum Ringraum 1.2 bildet. Radial außen ist die Zuleitung durch das Gehäuse 1.1 verschlossen. Weiterhin weist das Einpressteil 2 einen Strömungsverteiler 2.2 auf, der in Form einer radial nach innen weisenden Wand ausgebildet ist, die eine zentrische Öffnung 2.3 besitzt, welche einen Durchgang von der Durchgangsöffnung 3.2 des Deckels 3 zur zentrischen Durchflussöffnung 1.3 des Gehäuses 1.1 bildet. Zwischen der Innenwand des Deckels 3 und dem darauf zuweisenden stirnseitigen Ende des Einpressteils 2 wird ein mit Fluid durchströmbarer Raum 4 gebildet.

Durch den Stömungsverteiler 2.2 wird eine kleine Menge des Fluids immer an die höchste Stelle des Tilgers gespült und dadurch ermöglicht, dass der Tilger mit einer beliebigen Steigung im Fahrzeug eingebaut werden kann.

Zur Verdrehsicherung weist das Einpressteil 2 an seinem dem Strömungsverteiler 2.2 gegenüberliegenden Ende eine Abflachung 2.5 auf, die mit einer ersten Abflachung 1.5 am Gehäuse korrespondiert. An seinem zweiten Ende 1.6 wird der Tilger 1 ebenfalls an die Druckleitung (nicht dargestellt) angeschlossen. Um zu gewährleisten, dass die Zuleitung 2.1 des Einpressteils immer oben liegt (zur Entlüftung) sind auch an dem zweiten Ende 1.6 zweite Abflachungen 1.7 vorgesehen, die zur Lagefixierung dienen. Damit ist die relative Position der Zuleitung zu der Hauptleitung bestimmbar und ausrichtbar. Zur Entlüftung muss die Zuleitung 2.1 des Einpressteils 2 immer nach oben ausgerichtet werden.

Eine dreidimensionale Darstellung des Tilgers 1 wird in Figur 2 gezeigt. Daraus ist erkennbar, dass der Tilger 1 in Richtung zum Deckel 3 eine flanschartige Durchmessererweiterung 1.8 aufweist, von der sich zum Außendurchmesser des zylinderartigen Gehäuses 1.1 vier rippenartige erste Anschläge 1.9 erstrecken. Der Deckel 3 ist an seiner Außenkontur ebenfalls mit vier zweiten Anschlägen 3.3 versehen.

Der Deckel 3 wird mit dem Gehäuse 1.1 bevorzugt durch Reibschweißen verbunden. Das Reibschweißen erfolgt durch eine angepasste Geometrie der beiden Teile, wobei die ersten Anschläge 1.9 zur Lagefixierung und die zweiten Anschläge 3.3 zur Übertragung des Drehmomentes dienen. Zur Zentrierung weist der Deckel 3 einen stirnseitigen ringförmigen Vorsprung 3.4 auf, der in eine stirnseitige Ringnut 1.10 des Gehäuses 1.1 eingreift (siehe Figur 1).

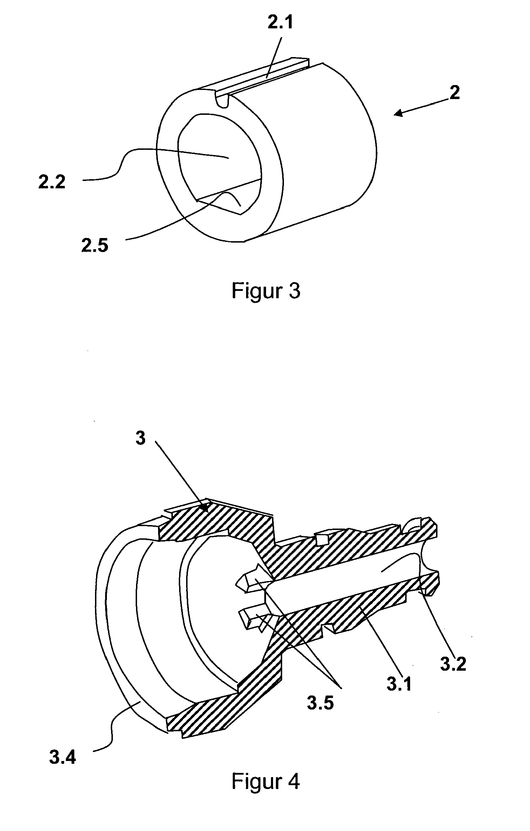

Ein dreidimensionales hohlzylinderförmiges Einpressteil 2 ist in Figur 3 dargestellt. Daraus sind die nutartige Zuleitung 2.1, die Öffnung 2.3 und die zur Lagefixierung dienende Abflachung 2.5 erkennbar. Durch die Zuleitung 2.1 in Form einer Nut kann ein kleiner Außendurchmesser realisiert werden. Im montierten Zustand wirkt die durch das Gehäuse 1.1 geschlossene Nut dann wie eine Bohrung, da für die Funktion nur der Querschnitt von Bedeutung ist.

Eine dreidimensionale Darstellung des Deckels 3 mit dem Anschluss 3.2 und der Durchgangsöffnung 3.2 ist Figur 4 entnehmbar.

Der Deckel 3 weist innen mehrere Stifte 3.5 auf, die sich in axialer Richtung erstrecken und die im montierten Zustand gegen das Einpressteil drücken und dieses axial fixieren.

Der Speicher/Tilger weist den Vorteil auf, dass die Steifigkeit aus der Dehnung des Gehäuses 1.1 kommt. Die Dehnung in radiale Richtung erlaubt eine kleine Verformung aber auf eine große Fläche. Der Querschnitt der Zuleitung 2.1 wird je nach gewünschter Tilgungsfrequenz angepasst. Über die Zuleitung 2.1 und den daran anschließenden Ringraum 1.2, der bei Druckerhöhung die Wände des Speichers/Tilgers radial nach außen verformt, wird die Dämpfung der Schwingungen in einer bestimmten Bandbreite erzielt.

Der Deckel 3 ist kegel- bzw. halbkugelförmig gestaltet, so dass dieser Raum in Verbindung mit dem Strömungsverteiler 2.2 des Einpressteils 2 zur Strömungsverteilung dient.

Die koaxiale Anordnung des Tilgers in der Druckleitung ermöglicht eine schlanke Bauform und eine einfache Einbindung in die Druckleitung. Ein Abzweig zwischen Tilger und Druckleitung ist nicht mehr erforderlich.

Zur Dämpfung von in eine hydraulische Strecke eingetragenen Schwingungen wird die Dämpfungseinrichtung in die hydraulische Strecke eingebunden. Diese neue koaxiale Lösung besteht aus nur drei Teilen, einem Gehäuse 1 (Speicher), einem Einpressteil 2, das endseitig in das Gehäuse 1 eingepresst ist und dem Deckel 3 und ist daher einfach und kostengünstig herstellbar.

Neben dem dargestellten Ausführungsbeispiel sind auch andere konstruktive Varianten für die Gestaltung des Speichers/Gehäuses 1 möglich. Die Buchse, die als Einpressteil fungiert, kann z. B. anstelle des Einpressens auch auf andere Weise befestigt werden.

### Bezugszeichenliste

- 1: Tilger
- 1.1: Gehäuse
- 1.2: Ringraum
- 1.3: Durchflussöffnung
- 1.4: erstes Ende
- 1.5: erste Abflachung
- 1.6: zweites Ende
- 1.7: zweite Abflachung
- 1.8: Durchmessererweiterung
- 1.9: erste Anschläge
- 1.10: Ringnut
- 2: Einpressteil
- 2.1: Zuleitung
- 2.2: Strömungsverteiler
- 2.3: Öffnung
- 2.5: Abflachung
- 3: Deckel
- 3.1: Anschluss
- 3.2: Durchgangsöffnung
- 3.3: zweite Anschläge
- 3.4: Vorsprung
- 3.5: Stifte
- 4: Raum

## Patentansprüche

1. Einen Tilger/Speicher (1) aufweisende Dämpfungseinrichtung zur Dämpfung unerwünschter Druckschwankungen in einer hydraulischen Strecke zur Kupplungsbetätigung, wobei ein Gebezylinder und ein Nehmerzylinder mittels einer von Fluid durchströmten Druckleitung miteinander verbunden sind, unter Verwendung des Tilgers/Speichers (1) basierend auf dem Helmholtz-Resonator Prinzip, wobei der Tilger (1) ein Gehäuse (1.1) mit einem Ringraum (1.2) aufweist, der im Wesentlichen parallel zur Durchflussrichtung des die Druckleitung durchströmenden Fluids anordenbar ist, **dadurch gekennzeichnet, dass** sich am Ringraum (1.2) endseitig ein Einpressteil (2) anschließt, welches mit einem Deckel (3) verschlossen ist, der einen mit einer Durchgangsöffnung versehenen Anschluss (3.1) für die Druckleitung aufweist, wobei durch das Einpressteil (2) eine Zuleitung (2.1) in den Ringraum (1.2) führt, und das Einpressteil (2) eine Verdrehsicherung in Form einer Abflachung (2.5) aufweist, die mit einer entsprechenden Fläche des Gehäuses (1.1) korrespondiert.

2. Dämpfungseinrichtung nach Anspruch 1, **dadurch gekennzeichnet, dass** der Tilger (1) eine Steifigkeit, d.h. eine hydraulische Kapazität für die Tilgungsfunktion, von ∼8mm³/bar aufweist.

3. Dämpfungseinrichtung nach Anspruch 1 oder 2, **dadurch gekennzeichnet, dass** die Zuleitung (2.1) als Nut ausgebildet ist, die an eine Gehäusewand des Gehäuses (1.1) derart anschließt, dass die Nut geschlossen wird und als Bohrung wirkt.

4. Dämpfungseinrichtung nach einem der Ansprüche 1 bis 3, **dadurch gekennzeichnet,**
**dass** das Gehäuse (1) an seinem zweiten Ende (1.6) einen zweiten Anschluss an die Druckleitung aufweist und dass das Gehäuse (1.1) lagefixiert an der Druckleitung befestigbar ist.

5. Dämpfungseinrichtung nach einem der Ansprüche 1 bis 4, **dadurch gekennzeichnet,**
**dass** das Gehäuse (1.1) so in die Druckleitung einbindbar ist, dass die relative Position der Zuleitung (2.1) zu der Druckleitung bekannt und verstellbar ist, so dass zur Gewährleistung der Entlüftung die Zuleitung (2.1) nach oben ausgerichtet ist.

6. Dämpfungseinrichtung nach einem der Ansprüche 1 bis 5, **dadurch gekennzeichnet,**
**dass** das Einpressteil (2) einen Strömungsverteiler (2.2) aufweist, durch welchen Fluid an die die höchste Stelle des Tilgers (1) gelangt.

## Claims

1. Damping device, having a vibration absorber/accumulator (1), for damping undesired pressure fluctuations in a hydraulic system for activating a clutch, wherein a master cylinder and a slave cylinder are connected to one another by means of a pressure line through which fluid flows, using the vibration absorber/accumulator (1) based on the Helmholtz resonator principle, wherein the vibration absorber (1) has a housing (1.1) with an annular space (1.2) which can be arranged essentially parallel to the through-flow direction of the fluid flowing through the pressure line, **characterized in that** a pressed-in part (2) adjoins the end side of the annular space (1.2) and is closed off with a lid (3) which has a connection (3.1), provided with a through-opening, for the pressure line, wherein a feed line (2.1) leads into the annular space (1.2) through the pressed-in part (2) and the pressed-in part (2) has a rotation-prevention means in the form of a flattened portion (2.5) which corresponds to the corresponding surface on the housing (1.1).

2. Damping device according to Claim 1, **characterized in that** the vibration absorber (1) has a degree of rigidity, i.e. a hydraulic capacity for the vibration absorption function, of ∼8 mm³/bar.

3. Damping device according to Claim 1 or 2, **characterized in that** the feed line (2.1) is embodied as a groove which adjoins a housing wall of the housing (1.1) in such a way that the groove is closed off and acts as a bore.

4. Damping device according to one of Claims 1 to 3,
**characterized**
**in that** the housing (1) has, at its second end (1.6), a second connection to the pressure line, and in that the housing (1.1) can be secured in a positionally fixed fashion to the pressure line.

5. Damping device according to one of Claims 1 to 4,
**characterized**
**in that** the housing (1.1) can be connected into the pressure line in such a way that the relative position of the feed line (2.1) with respect to the pressure line is known and can be adjusted with the result that the feed line (2.1) is oriented upward in order to ensure the bleeding.

6. Damping device according to one of Claims 1 to 5,
**characterized**
**in that** the pressed-in part (2) has a flow distributor (2.2) through which fluid moves to the highest point of the vibration absorber (1).

## Revendications

1. Dispositif d'amortissement présentant un absorbeur/accumulateur (1) pour l'amortissement de fluctuations de pression indésirables dans une section hydraulique pour l'actionnement d'un accouplement, dans lequel un cylindre émetteur et un cylindre récepteur sont raccordés l'un à l'autre au moyen d'une conduite sous pression parcourue par un fluide, avec utilisation de l'absorbeur/accumulateur (1) reposant sur le principe d'un résonateur de Helmholtz, dans lequel l'absorbeur (1) présente un boîtier (1.1) avec une chambre annulaire (1.2), qui peut être agencée de façon essentiellement parallèle à la direction de circulation du fluide parcourant la conduite sous pression, **caractérisé en ce qu'**une pièce encastrée (2) se raccorde du côté de l'extrémité à la chambre annulaire (1.2) et est fermée par un couvercle (3), qui présente un raccord (3.1) muni d'une ouverture de passage pour la conduite sous pression, dans lequel une conduite d'alimentation (2.1) conduit dans la chambre annulaire (1.2) à travers la pièce encastrée (2), et la pièce encastrée (2) présente une sécurité contre la rotation sous la forme d'un méplat (2.5), qui correspond à une surface correspondante du boîtier (1.1).

2. Dispositif d'amortissement selon la revendication 1, **caractérisé en ce que** l'absorbeur (1) présente une rigidité, c'est-à-dire une capacité hydraulique pour la fonction d'absorption, de ∼8 mm³/bar.

3. Dispositif d'amortissement selon la revendication 1 ou 2, **caractérisé en ce que** la conduite d'alimentation (2.1) est réalisée sous forme de rainure, qui se raccorde à une paroi de boîtier du boîtier (1.1), de telle manière que la rainure soit fermée et fasse fonction de perçage.

4. Dispositif d'amortissement selon l'une quelconque des revendications 1 à 3, **caractérisé en ce que** le boîtier (1) présente à sa deuxième extrémité (1.6) un deuxième raccord à la conduite sous pression et **en ce que** le boîtier (1.1) peut être fixé en position fixe à la conduite sous pression.

5. Dispositif d'amortissement selon l'une quelconque des revendications 1 à 4, **caractérisé en ce que** le boîtier (1.1) peut être inséré dans la conduite sous pression, de telle manière que la position relative de la conduite d'alimentation (2.1) par rapport à la conduite sous pression soit connue et réglable, de telle manière que la conduite d'alimentation (2.1) soit orientée vers le haut pour garantir l'aération.

6. Dispositif d'amortissement selon l'une quelconque des revendications 1 à 5, **caractérisé en ce que** la pièce encastrée (2) présente un répartiteur d'écoulement (2.2), par lequel du fluide arrive au point le plus haut de l'absorbeur (1).
